(19) Europäisches Patentamt
European Patent Office
Office européen des brevets

(11) **EP 4 383 143 A1**

(12) **EUROPEAN PATENT APPLICATION**

(43) Date of publication:
**12.06.2024 Bulletin 2024/24**

(21) Application number: **23306300.7**

(22) Date of filing: **27.07.2023**

(51) International Patent Classification (IPC):
***G06N 10/40*** *(2022.01)*

(52) Cooperative Patent Classification (CPC):
**G06N 10/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.12.2022 EP 22306829**

(71) Applicant: **Pasqal
91300 Massy (FR)**

(72) Inventors:
• **SIGNOLES, Adrien
91300 Massy (FR)**
• **DAREAU, Alexandre
91300 Massy (FR)**
• **LASSABLIERE, Lucas
91300 Massy (FR)**
• **NGUYEN, Catherine
91300 Massy (FR)**
• **FAVIER, Pierre
91300 Massy (FR)**

(74) Representative: **Slingsby Partners LLP
1 Kingsway
London WC2B 6AN (GB)**

(54) **QUBIT ADDRESSING**

(57) There is presented a method for outputting at least first and second electromagnetic, EM, signals for respectively interacting with spatially separated first and second matter particles in an interaction region. The matter particles act as qubits for use with a quantum computation. The interaction of the EM signals with the qubits is associated with a Hamiltonian operator comprising at least a first and a second element. EM radiation is generated using an EM source. The EM radiation is modulated by the with a first modulator configured to temporally modulate the EM radiation within a computation time period. The first modulator is associated with the first element of the Hamiltonian operator. The EM radiation is modulated with a second modulator configured to modulate the EM radiation such that the first EM signal is spatially separate to the second EM signal in the interaction region. The second modulator is associated with the second element of the Hamiltonian operator. The one or more EM signals are output based on the modulated EM radiation, to the plurality of matter particles.

Fig. 1

**Description**

Technical field

The disclosure relates to programmable qubit addressing, and in particular, though not exclusively, to methods and systems for addressing qubits in a qubit array and a computer program product to execute such methods for optical qubit addressing.

Background

Current quantum computers based on trapped qubits provide a promising platform for quantum computing. Executing quantum operations, such as analog quantum computing operations, digital quantum gate operations, or hybrid (analog-digital) operations, of a quantum circuit defining a quantum algorithm requires accurate, programmable and scalable addressing of the trapped qubits. WO2019014589 describes a neutral atom computer comprising trapped qubits which are addressed by spatially controlling optical beams using acousto-optic deflectors (AODs). AOD-based controlling of light beams only provides a limited bandwidth. Moreover, addressing qubits based on arbitrary qubit illumination patterns is difficult using AODs, as AODs have limited agility in terms of the geometry the addressed qubits.
Other techniques to optically address qubits include the use of spatial light modulators (SLMs). For example, WO2021112948 describes a method for addressing qubits of a qubit quantum computer using holograms. This method requires encoding layers of gate operations of a quantum circuit into holograms displayed on a slow segmented SLM, which may be used to produce spatial optical distributions that are used to operate on a qubit array. This scheme does not scale very well towards large qubits arrays as an SLM (or part thereof) is needed for each layer of the algorithm.
WO2021222211 describes optically controlling qubits with spatial light modulators. WO2021222211 uses holograms in combination with an intensity transmission mask provided by SLMs. This scheme is not suitable for analog or analog-digital hybrid quantum computing.
Hence, from the above it follows that there is a need in the art for improved optical addressing schemes of qubits. In particular, there is a need in the art for improved methods and systems that provide programmable optical addressing of multiple qubits in a qubit array, specifically for analog computation.

Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.
Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store, a program for use by or in connection with an instruction execution system, apparatus, or device.
A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.
Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the embodiment, user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP-GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In a first aspect there is presented a method for outputting at least first and second electromagnetic, EM, signals for respectively interacting with spatially separated first and second matter particles in an interaction region; the matter particles act as qubits for use with a quantum computation; the quantum computation comprising a computation time period; the interaction of the EM signals with the qubits is associated with a Hamiltonian operator comprising at least a first and a second element; the method comprising: A) generating EM radiation using an EM source; B)in any order, I) modulating the EM radiation with a first modulator, the first modulator configured to temporally modulate the EM radiation within the computation time period; the first modulator associated with the first element of the Hamiltonian operator; II) modulating the EM radiation with a second modulator, the second modulator configured to modulate the EM radiation such that the first EM signal is spatially separate to the second EM signal in the interaction region; the second modulator associated with the second element of the Hamiltonian operator; and, C) outputting the one or more EM signals, based on the modulated EM radiation, to the plurality of matter particles. The term 'EM signal' may also be referred to as the modulated EM radiation output by the method for interacting with the matter particles.

The method of the first aspect may be adapted according to any suitable way disclosed herein, including but not limited to any one or more of the following options. It is to be understood that any of the following options may be combined with any of the examples described elsewhere herein.

The first modulator may be an electro-optic modulator, EOM, or an acousto-optic modulator, AOM. The EOM or AOM may be configured to transition from a first modulation state to a second modulation state within 100ns or less, preferably 20ns or less. The method may comprise generating EM signals for all of the matter particles used in the quantum computation. The first modulator may be configured to modulate substantially all of the EM radiation associated with all of the EM signals for the quantum computation.

The second modulator may control a parameter of the first EM signal independently to the second EM signal. The second modulator may control the first and second EM signals to control at least one of: i) the position; ii) the intensity; of each of the first and second EM signals.

The method may comprise modulating the EM radiation with a third modulator, wherein the third modulator is configured to independently modulate the first and second EM signal interacting with the first and second qubits in the quantum computation; the third modulator associated with a third element of the Hamiltonian operator.

The third modulator may receive EM radiation modulated by the second modulator. The third modulator may comprise a plurality of EM reflecting elements.

The third modulator may be a digital micromirror device, DMD. The third modulator may be a matrix of micro-electromechanical systems, MEMS. The third modulator may be configured to operate in a plurality of states, for example with two states. At least a first state is for directing EM radiation towards the interaction region. At least a second state is for directing EM radiation away from the interaction region. The third modulator may be one of a plurality of third modulators in a set of modulators.

The modulation of the EM radiation by the second modulator may generate: a first EM beam associated with the first EM signal; a second EM beam associated with the second EM signal. The plurality of EM reflecting elements may comprise: a first EM reflecting element configured to receive substantially all of the first EM beam; a second EM reflecting element configured to receive substantially all of the second EM beam.

The second modulator may receive modulated EM radiation output from the first modulator. The first modulator may receive modulated EM radiation output from the second modulator.

The modulation of the EM radiation by the second modulator may remain constant over the computation time period. The modulation of the EM radiation by the third modulator may remain constant over the computation time period.

The plurality of matter particles may be neutral atoms.

The first and second EM signals may comprise an off-resonance wavelength of an atomic transition.

Further EM radiation at a different wavelength to the first EM signal may be incident upon the first matter particle; the wavelength of the further EM radiation may be for transitioning the matter particle from a first energy state to a second energy state; the first EM signal may prevent the said transition.

The first and second EM signals may comprise an on-resonant wavelength of an atomic transition.

The first EM signal and second EM signal may be input simultaneously to the respective first and second matter particles.

In general, the method may use a plurality of matter particles wherein different EM signals are directed to different matter particles simultaneously.

The Hamiltonian operator may comprise a function in the form of: $\hat{\mathcal{H}} = A(t) \sum_j \epsilon_j \, \hat{\sigma}_j^\alpha$ wherein $\hat{\mathcal{H}}$ represents the Hamiltonian experienced by the qubits in the qubit array, $A(t)$ represents the modulation by the first modulator with respect to time $t$, $\varepsilon_j$ represents the modulation by the second modulator applied to qubit $j$, and $\hat{\sigma}_j^\alpha$ represents a Pauli matrix where $\alpha$ is either $x$ or $z$ for resonant or off-resonant beams respectively.

For resonant beams, $\alpha$ may also be $y$. The term $\varepsilon_j$ may be constant with respect to time $t$ for a given computational sequence but can be updated between sequences, for example, updating may take place after the quantum system experiences decoherence. The rate of change of $\varepsilon_j$ may be 10 Hz.

The Hamiltonian operator may comprise a function in the form of: $\hat{\mathcal{H}} = A(t) \sum_j h_j(t)\epsilon_j \, \hat{\sigma}_j^\alpha$ wherein $\hat{\mathcal{H}}$ represents the Hamiltonian experienced by the qubits in the qubit array, $A(t)$ represents the modulation by the first modulator with respect to time $t$, $\varepsilon_j$ represents the modulation by the second modulator applied to qubit $j$, $\hat{\sigma}_j^\alpha$ represents a Pauli matrix where $\alpha$ is either $x$ or $z$ for resonant or off-resonant beams respectively, and wherein $h_j(t) = 0,1$ and represents the modulation by the third modulator. Considerations discussed for other Hamiltonian operators described above and elsewhere herein may apply to this Hamiltonian.

The quantum computation may be an analog computation. The quantum computation may be a digital computation. The quantum computation may be a hybrid analog-digital computation.

Associated with the first aspect, there is presented a system for outputting at least first and second electromagnetic, EM, signals for respectively interacting with spatially separated first and second matter particles in an interaction region; the matter particles act as qubits for use with a quantum computation; the quantum computation comprising a computation time period; the interaction of the EM signals with the qubits is associated with a Hamiltonian operator comprising at least a first and a second element; the system configured to: A) generate EM radiation using an EM source; B) in any order, I) modulate the EM radiation with a first modulator, the first modulator configured to temporally modulate the EM radiation within the computation time period; the first modulator associated with the first element of the Hamiltonian operator; II) modulate the EM radiation with a second modulator, the second modulator configured to modulate the EM radiation such that the first EM signal is spatially separate to the second EM signal in the interaction region; the second modulator associated with the second element of the Hamiltonian operator; and, C) output the one or more EM signals, based on the modulated EM radiation, to the plurality of matter particles.

In a second aspect, there is presented an apparatus for modulating electromagnetic, EM, radiation for interacting with a plurality of matter particles in an interaction region; the EM radiation generated by one or more EM sources; the matter particles acting as qubits used for a quantum computation; the quantum computation comprising a computation time period; the apparatus comprising at least: i) a first set of one or more modulators ii) a second set of one or more modulators; iii) a third set of one or more modulators; each modulator in each set is for modulating the EM radiation; wherein: I) the first set of one or more modulators receives the EM radiation and comprises at least a first modulator for temporally modulating the received EM radiation within the computation time period; II) the second set of one or more modulators receives the EM radiation and comprises at least a second modulator for applying a modulation to the EM radiation for generating a spatial pattern of spatially separated EM intensity distributions in the interaction region; the EM intensity distributions for interacting with the matter particles; III) the third set of one or more modulators comprises at least a third modulator comprising a plurality of reflecting elements for receiving the EM radiation and controllably directing the EM radiation in a plurality of directions wherein at least one direction is towards the interaction region; wherein at least one of the first set and second set of modulators receives the EM radiation from the said EM sources and outputs modulated EM radiation towards the other of the first set and second set of modulators; the third set of modulators receives modulated EM radiation from the first set or second set of modulators.

The third set of one or more modulators may be configured to receive a quantity of the EM radiation output from the first or second set of modulators; over 50% of the said quantity of EM radiation may be received by the third modulator.

The apparatus may be configured to direct substantially all the said quantity of EM radiation towards the third modulator from either the first set or the second set of modulators.

The reflecting elements may comprise one or more moveable mirrors. The second set of modulators may comprise micromirrors, such as a DMD or matrix of MEMS.

The quantum computation may use: a) a quantum system; b) a transition of at least one qubit from a first state to a second state (which may correspond to an atomic transition between a first energy state and a second energy state). The computation time period may be within a decoherence time period where the quantum system remains coherent. There may be a small amount of decoherence during the computation time period. The first modulator may be configured to modulate the received EM radiation to transition the qubit or matter particle from the first state to the second state within the computation time period.

The apparatus may be configured to direct substantially all of the input EM radiation to the first modulator.

The second set of one or more modulators may comprise a spatial light modulator (SLM), wherein the one or more SLM comprises at least one of: an acousto-optic deflector; a liquid crystal device.

The examples in this disclosure may aim to provide scalable and programmable individual addressing of multiple qubits in a qubit array of a quantum computer. Hence, the following examples define methods and systems for programmable optical addressing of qubits in a qubit array based on spatio-temporally structured light.

In a third aspect, the examples relate to a method of optically addressing qubits in a qubit array. The method may include configuring micromirrors of at least a first and second micromirror device based on addressing information identifying one or more first qubits and one or more second qubits in the qubit array that need to be optically addressed at a first time instance and a second time instance respectively. The method may include generating a structured light beam which is spatially structured in accordance with the spatial arrangement of the qubits in the qubit array and the spatial arrangement of micromirrors of the first and second micromirror device and which is temporally structured based on a polarization or phase of the structure light beam. The method may further include exposing the first micromirror device with part of the structured light beam that is associated with a first polarisation or first phase and the second micromirror device with a part of the structured light beam that is associated with a second polarisation or second phase. The method may also include exposing the one or more first qubits identified with a first plurality of focused light beams formed based on spatially structured light originating from the first micromirror device and exposing the one or more second qubits with a second plurality of focused light beams formed based spatially structured light originating from the second micromirror device.

The addressing information may include at least a first and second illumination pattern, the first illumination pattern identifying the first qubits in the qubit array that need to be optically addressed at a first time instance and second illumination pattern identifying the second qubits in the qubit array that need to be optically addressed at a second time instance;

Here, the term illumination pattern refers to information (in any format) defining qubits in a qubit array that need to be optically addressed for any purpose, e.g. calibration, control, off-resonance, single gate operation, multi gate operation. Typically, an illumination pattern may define an arbitrary selection of qubits in the qubit array that need to be optically addressed simultaneously.

Hence, temporal structure based on polarization or phase may be used to alternately exposure two or more computer-controlled micromirror devices by a spatially structured light beam. This way, different qubits identified by addressing information may be optically addressed at high frequencies to perform any type of operation on qubits, including calibration, initialisation, single-gate operations, multi-gate operations etc. The micromirror devices may reflect part of the spatially structured light towards the qubit array so it can be used to fast and efficiently address multiple individual qubits simultaneously. The spatial modulation gives a spatial structure to the light beam so that it has a 2D grid-like intensity profile that matches the gird of micromirrors of the micromirror devices and the grid of qubits. This way each of a plurality of light beams can be focused onto an individual qubit, without affecting neighbouring qubits. Further, the addressing scheme is based on simple illumination patterns, which allow any type of addressing, without complex encoding schemes as known from holographic type of qubit addressing.

The qubit array may be a 1D, 2D or 3D qubit array.

The step of generating a structured light beam may include generating a spatially structured light beam by exposing a light beam of a laser system to a spatial light modulator. In a further example, the generating a structured light beam may include temporarily structuring a light beam of a laser system or the spatially structured light beam using a temporal light modulator. The temporal light modulator may be configured to modulate the polarization or the phase of a light beam. The spatial light modulator may comprise an electro-optic modulator for modulating the polarization or the phase of a light beam.

The modulation frequency of the polarization modulator may be between 10 and 1000 MHz.

Exposing the first and second micromirror device may include: exposing the structured light beam to a beam splitter to split the structured light beam into a spatially structured light beam associated with a first polarization or a first phase and a spatially structured light beam associated with a second polarization or a second phase.

The addressing information, such as the first and second illumination pattern, may identify one or more pairs of qubits, the first illumination pattern identifying for each of the one or more pairs of qubits a first qubit that needs to be addressed and the second illumination pattern identifying for each of the one or more pairs of qubits a second qubit that needs to be addressed.

At least part of the addressing information may define qubit operations of a quantum circuit.

The qubits may be atomic qubits, e.g. based on neutral atoms. In an example, the wavelength of the structured light beam may be selected to control the Rydberg states of the atomic qubits in the qubit array.

The method may comprise: after the exposure of the qubits identified by the first and second illumination pattern, configuring micromirrors of the first and second micromirror device in accordance with a third and fourth illumination pattern respectively, identifying further qubits in the qubit array that need to be optically addressed.

Each of the plurality of focused light beams may be configured to address one of the qubits in the qubit array, without affecting one or more qubits neighbouring the addressed qubit.

Each of the first and second micromirror device may be configured as a digital micromirror device comprising mechanically movable micromirrors. In an embodiment, the spatial structuring of the structured light beam may be based on a liquid crystal based spatial light modulator.

The method may include generating a plurality of focussed light beams to form an array of optical tweezers for optically trapping the qubits.

Associated with the third aspect, the examples may relate to a system for optically addressing qubits in a qubit array, preferably a 2D qubit array, wherein the system may comprise a computer connected to an optical system comprising at least a first and second micromirror device, a laser system, a spatial light modulator and an electro-optic modulator. In an example, the computer may be configured to execute one or more of the following steps: configure micromirrors of at least the first and second micromirror device based on addressing information identifying one or more first qubits and one or more second qubits in the qubit array that need to be optically addressed at a first time instance and a second time instance respectively; control the laser system, the spatial light modulator and the electro-optic modulator to generate a structured light beam which is spatially structured in accordance with the spatial arrangement of the qubits in the qubit array and the micromirrors of the first and second micromirror device and which is temporally structured based on a polarization or phase of the structure light beam; expose the first micromirror device with part of the structured light beam that is associated with a first polarisation or first phase and the second micromirror device with a part of the structured light beam that is associated with a second polarisation or second phase; and, expose the one or more first qubits identified with a first plurality of focused light beams formed based on spatially structured light originating from the first micromirror device and exposing the one or more second qubits with a second plurality of focused light beams formed based spatially structured light originating from the second micromirror device.

Associated with the third aspect, the examples may relate to an optical qubit addressing module for addressing qubits in a qubit array. The module may comprise at least first and second micromirror devices configured to project a first spatially structured light beam onto first qubits in the qubit array and to project a second spatially structured light beam onto second qubits in the qubit array. The module may further comprise at least one or more of the following optical systems: a first optical system configured to generate a structured light beam which is spatially structured in accordance with the spatial arrangement of the qubits in the qubit array and the spatial arrangement of micromirrors of the first and second micromirror device and which is temporally structured based on a polarization or phase of the structure light beam; a second optical system configured to expose the first micromirror device with part of the structured light beam that is associated with a first polarisation or first phase and to expose the second micromirror device with a part of the structured light beam that is associated with a second polarisation or second phase; and a third optical system configured to expose the first qubits with a first plurality of focused light beams formed based on spatially structured light originating from the first micromirror device and exposing the second qubits with a second plurality of focused light beams formed based spatially structured light originating from the second micromirror device.

Associated with the third aspect, the examples may also relate to a hybrid computer system comprising a quantum register comprising an array of qubits and a classical computer system configured to control an optical qubit addressing module configured for addressing qubits in the qubit array, wherein classical computer system is configured to perform executable operations, wherein the executable operations may comprise one or more of the following steps: configuring micromirrors of at least the first and second micromirror device based on addressing information identifying one or more first qubits and one or more second qubits in the qubit array that need to be optically addressed at a first time instance and a second time instance respectively; generating a structured light beam which is spatially structured in accordance with the spatial arrangement of the qubits in the qubit array and the spatial arrangement of micromirrors of the first and second micromirror device and which is temporally structured based on a polarization or phase of the structure light beam; exposing the first micromirror device with part of the structured light beam that is associated with a first polarisation or first phase and exposing the second micromirror device with a part of the structured light beam that is associated with a second polarisation or second phase; and, exposing the one or more first qubits with a first plurality of focused light beams formed based on spatially structured light originating from the first micromirror device and exposing the one or more second qubits with a second plurality of focused light beams formed based spatially structured light originating from the second micromirror device.

In a further aspect, the examples may relate to a computer program or suite of computer programs comprising one or more software code portions the software code portions, when run on a computer, being configured for executing the method steps according any the steps described with reference to the steps above.

The invention will be further illustrated with reference to the attached drawings, which schematically will show examples according to the invention. It will be understood that the invention is not in any way restricted to these specific examples.

Brief Description of the drawings

Fig. 1 depicts an example system for optically addressing qubits in qubit array;

Fig. 2A, 2B and 2C depict an example general scheme of optically addressing qubits in a qubit array;

Fig. 3 schematically depicts another example system for optically addressing qubits;

Fig. 4 schematically depicts example illumination patterns for optically addressing qubits in a qubit array;

Fig. 5 schematically depicts an example timing graph illustrating the exposure of the array of qubits using different illumination patterns representing gate operations;

IFig. 6 depicts a further example system for optically addressing an array of atomic qubits;

Fig. 7 schematically depicts an example of a system for interacting with matter particles acting as qubits for use in a quantum computation;

Fig. 8 schematically depicts another example of a system for interacting with matter particles acting as qubits for use in a quantum computation;

Fig. 9A and 9B depict an example scheme for interacting with matter particles acting as qubits for use in a quantum computation;

Fig. 10 shows examples of qubit operations which may be executed using the optical qubit addressing schemes described with reference to the examples.

Fig. 11 depicts a computer system comprising a classical computer and a quantum computer system comprising an atomic qubit register.

Detailed Description

The examples in this disclosure generally relate to methods and systems for addressing qubits in a qubit array, for example a one-dimensional (1D), two-dimensional (2-D) or three-dimensional (3D) array of atomic qubits. Here, a qubit refers to a two-state quantum system which can be described by quantized energy levels and which can be used to process quantum information. More generally, n-state quantum systems may be used as a quantum computational unit referred to as a qubit. Although the examples are described with reference to qubits, they are not limited to a two-state quantum system and can also be used to optically address n-state quantum systems in a qubit array.

Atomic qubits may be used as qubits register of a quantum computer. Atomic qubits can be implemented based on neutral atoms or other quantum systems such as ions, molecules, trapping centres, etc. A qubit may be implemented on the basis of a single quantum particle such as a single atom or ion, or a group of quantum particles. A trapping system, e.g. an electro-magnetic trapping system may be used to arrange the qubits in a geometrical arrangement, for example, a one dimensional, two dimensional or three-dimensional geometrical arrangement. Typically, the distance between the quantum particles is selected so that interaction between the quantum particles is possible. For example, when using neutral atoms as qubit registers the distance between the particles is of the order of micrometres so that qubits can interact when they are in the Rydberg state. The qubits can be controlled and manipulated by optically addressing individual qubits in the array of qubits.

In this application, optically addressing an individual qubit refers to the process of exposing a qubit with light of a focused laser beam of a certain intensity. Typically, the exposure of a qubit is based on one or more laser pulses of a certain amplitude and duration, typically in the range of nanoseconds. The focused light beam may have an intensity profile such that the light only interacts with the individual qubit without affecting neighboring qubits. When an individual qubit is optically addressed the light may resonantly interact with the qubit. Alternatively, the light may put the individually addressed qubit in an off-resonant state. Both types of optical addressing can be used for implementing the execution of qubit operations. In some examples, individual optical addressing of qubits may be combined with global addressing using e.g. a laser beam that is configured to expose multiple or even all qubits in the qubit array. Alternatively and/or in addition, a microwave field that interacts with the qubits in the qubit array may be used to globally address qubits.

In this application, EM radiation may be any wavelength but is preferably in the following ranges: the visible (380-750nm) or near infrared (750nm-2500nm). Preferably the wavelength is between 700-1020nm, or preferably 800-900nm. EM radiation may be a continuous wave or pulsed and/or have a time dependent intensity profile. The cross-sectional intensity profile of the EM radiation may, for example, be a Gaussian distribution. The EM radiation may have a specified central wavelength. The polarisation of the EM radiation may be linear, circular, or elliptical. The polarisation of the different laser sources, or EM emitters, may be the same or different. The EM emitters may emit multimode EM radiation. EM radiation may comprise a wavelength, hence frequency, that is non-resonant or 'off resonance' from the atomic transitions of the matter particles, for example not being resonant with the atomic transitions, i.e., the energy required to transition a matter particle between discrete energy levels. For example, the EM radiation may have a wavelength of 850 nm. Exposing matter particles to non-resonant EM radiation shifts the energy levels of the matter particles, the direction of the shifted energy level depending on if the wavelength of the EM radiation is above or below the transition wavelength. These energy levels are typically those that define different atomic states that represent qubit states or states that the matter particles transition between as part of a quantum computation process. Such off-resonant EM wavelengths may be used, for example for trapping, or anti-addressing. In other examples the radiation may be resonant with an atomic energy state transition. For example, the EM radiation for controlling qubit state transitions may have a wavelength of 420, 780 or 1013 nm.

When executing large and complex quantum circuits on an atomic qubit quantum computer, programmable optical addressing schemes are needed that allow accurate optical manipulation of individual qubits in the qubit array based on arbitrary illumination patterns. Here, the optical manipulation of individual qubits includes execution of single qubit operations, two-qubit operations and/or multi-qubit operations, wherein the two- or multi-qubit operations require interaction between the qubits. Interaction may for example occur when qubits in the Rydberg state are close to each other, e.g. neighbouring qubits. The qubit operations need to be executed within the coherence time of the states of the qubits. As the coherence time of the quantum states are still rather short, execution of qubit operations needs to be performed in a fast and efficient way. Here, efficient execution may include executing qubit operations simultaneously (in parallel) in different parts of the qubit array.

To address these challenges, the examples in this disclosure describe methods and systems for optically addressing qubits in a qubit array based on spatiotemporally structured light. Temporal structure based on polarization may be used to enable alternating exposure of two or more computer-controlled micromirror devices by a spatially structured light beam. The micromirror devices may reflect part of the spatially structured light towards the qubit array so it can be used to fast and efficiently address multiple individual qubits. The spatial modulation may give a spatial structure to the light beam so that it has a 2D grid-like intensity profile that matches the grid of micromirrors on the micromirror devices and the grid of qubits so that each of a plurality of light beams can be focused onto an individual qubit, without affecting neighbouring qubits. Further, the addressing scheme is based on simple illumination patterns, which allow any type of addressing, without complex encoding schemes as known from holographic type of qubit addressing.

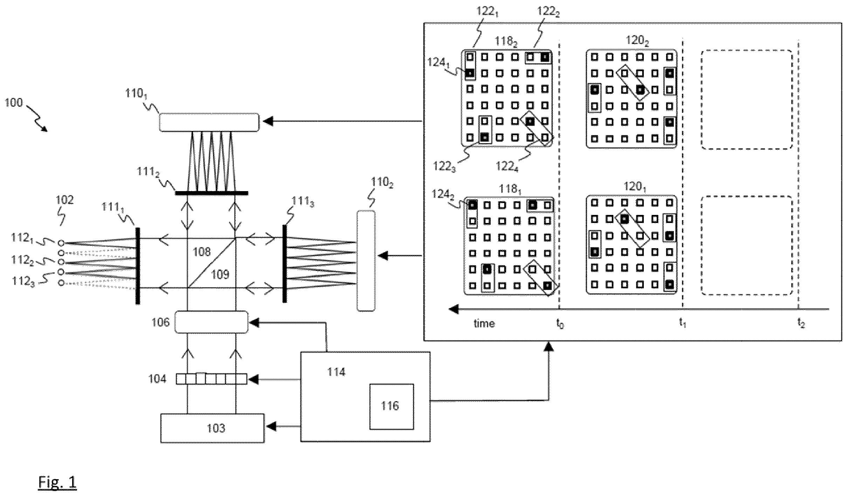

Fig 1 illustrates a system for optically addressing qubits of a qubit array according to an example. In particular, the figure illustrates an arrangement of qubits 102, e.g. a 2D qubit array, wherein an optical addressing module is configured to optically address qubits by projecting focused light beams onto individual qubits of the qubit array. As shown in the figure, the optical addressing module may include a laser system 103, which is optically aligned with a spatial modulator 104, for example a spatial light modulator (SLM) for spatially modulating a light field, a temporal light modulator 106, e.g. electro-optic modulator (EOM) for temporally modulating a light field based on polarization or phase, an optical splitter 108 for splitting a temporally modulated light beam based on the temporally modulated optical property such as polarization or phase. In figure 1, the spatial modulator 104 is placed in front of the temporal modulator 106. The optical addressing module may be configured with the positions of the spatial modulator 104 and the temporal modulator 106 reversed, as in examples described elsewhere herein, so that the temporal modulator 106 is upstream or ahead of the spatial modulator 104. The temporal modulator 106 may also be an acousto-optic modulator, AOM. The temporal modulator 106 may modulate the intensity of the light. The optical splitter may be optically aligned with at least two micromirror devices $110_{1,2}$, such as a digital micromirror device (DMD) and the qubit array. Optical elements $111_{2,3}$, refractive and/or diffractive optical elements, may be used to focus spatially modulated light beam originating from the laser source as a plurality of focused light beams onto the micromirror devices. Spatially modulated light originating from the micromirror devices may be relayed via an optical relay element 109 towards the qubit array. One or more further optical elements $111_1$, refractive and/or diffractive optical elements, may be used to focus the spatially modulated light originating from the micromirror devices into a plurality of light beams, wherein each of the plurality of light beams is focused onto a qubit in the qubit array. The optical elements $111_{1-3}$ may be lenses. The three lenses may be the same lens, with the same focus and aperture.

Further components required for a quantum computation are not shown for clarity of the figure, such as but not limited to: a vacuum chamber and its associated running equipment such as electronic controllers, user interfaces and vacuum pumps.

The optical addressing module may be controlled by a computer 114. The micromirrors of the reflective SLMs may be controlled by the computer according to addressing information that identifies different qubits in the qubit array that need to be optically addressed at different time instances. The addressing information may be in the form of different illumination patterns wherein each illumination pattern represents information (in any data format) that identifies qubits in the qubit array that need to be optically addressed at a given time instance. For example, in the figure, a plurality of focused light beams is generated wherein each focused light beam addresses a qubit $112_{1-3}$. The beam profile, i.e. the cross-sectional intensity profile, of a focused light beam that is used to optically address a qubit may be configured such that only the addressed qubit interacts (is exposed to) with the light of the focused light beam, while other qubits, e.g. neighboring qubits, are not influenced by the focused light beam that is used for addressing the qubit. Qubits not identified in the illumination pattern are not addressed, i.e. no focused light beams are generated for these qubits.

The computer may configure the micromirrors of the micromirror devices based on the information in the illumination patterns at predetermined time instances, e.g. at a frequency which can be handled by the micromirror devices. For example, the micromirror devices may be a micro-electromechanical system (MEMS) based digital micromirror device (DMD) which has switching times of tens of microseconds. A MEMS may be a system that induces electromechanical coupling with structures at the micrometric scale. A DMD may be an electro-mechanical device made of arrays of micro-mirrors that can be electronically commuted. For example, at time instance $t_0$ the first and second micromirror device may be configured based on information associated with a first pair of illumination patterns $118_{1,2}$ and at time instance $t_1$ the first and second micromirror device may be configured based on information associated with a second pair of illumination patterns $120_{1,2}$. In an example, a DMD may be used to select which optical traps to address.

In an example, the addressing information may represent "digital" qubit operations, e.g. single qubit operations and/or multiple (e.g. two) qubit operations. In an example, illumination patterns may represent a plurality of single-, two- or multi qubit gate operations, which can be executed by the optical addressing module at high speed.

A two-qubit operation may be executed by optically addressing one or more pairs of qubits in the qubit array. The pairs of qubits may be neighbouring. For example, illumination patterns $118_{1,2}$ may identify one or more pairs of qubits 122 that are close to each other, wherein the first illumination pattern $118_1$ may be used by the computer to instruct the first micromirror device to spatially modulate the reflected light so that a first qubit $124_1$ of each qubit pair is exposed to a focused laser beam. Similarly, the second illumination pattern may be used by the computer to instruct the second micromirror device to spatially modulate the reflected light so that a second qubit $124_2$ of the qubit pair is exposed to a focused laser beam. In an example, these exposures may be part of an execution of a two-qubit logical gate operation.

In a similar way (not shown), the addressing information may identify one or more qubits for performing single qubit operations, such as a NOT gate. A single qubit operation may be executed by optically addressing a qubit identified by an illumination pattern with a focused light pulse (a so-called $\pi$-pulse) of a certain amplitude and duration so that when the qubit is in the $|1\rangle$ state the laser field will rotate the Bloch vector over an angle of $\pi$ so that it ends up in the $|0\rangle$ state and vice-versa.

In further examples, the addressing information may be used to identify qubits that need to be optically addressed for other reasons, e.g. to prepare, trap, calibrate or initialize qubits in the qubit array. In other examples, one or more illumination patterns may be used to identify a large group of qubits to achieve entanglement between the optically addressed group of qubits. Such addressing may be used when using the atomic quantum register for analog quantum computation schemes or for digital-analog quantum computation schemes.

The computer 114 may include an illumination pattern generator 116, which is configured to convert qubit operations in a quantum circuit to a sequence of illumination patterns representing information identifying which qubits need to be addressed, which is used by the computer to control the micromirror devices to expose predetermined qubits in the qubit array.

To execute the qubit operations of a quantum circuit, the laser system may be controlled to generate a laser beam which is spatially modulated by an SLM to form a spatially modulated light field. The SLM may be a programmable device to shape the spatial mode of the laser beam. The SLM may be an optical phase modulator (OPM), which is a programmable device to modulate the phase of an optical beam. Preferably, the SLM may be a liquid crystal type SLM, such as a liquid-crystal on silicon (LCOS) SLM, which may be an OPM based on arrays of liquid crystals. The SLM may be used to generate traps for the matter particles acting as qubits.

An EOM may be used to temporally modulate the polarization, intensity, frequency, or phase of the spatially modulated light field. The EOM may be an optical device able to modulate EM radiation, such as a light beam, based on an electric signal through electro-optical coupling. For instance, the EOM may be a crystal in which birefringence can be tuned by electric field and induces phase modulation of a light beam going through it. An AOM may be used to temporally modulate the intensity, frequency or phase of the spatially modulated light. The AOM may be an optical device able to modulate EM radiation, such as a light beam, based on an electric signal through acousto-optical coupling. For instance, the AOM may be a crystal in which electrically generated acoustic waves propagate and modulate a light beam going through it. Preferably, the EOM or AOM may temporally modulate the intensity of the light. The EOM, or AOM, may be controlled by a high frequency control signal so that the polarization, intensity, or phase may be modulated at high frequencies. In an example, the frequency of the modulation may be between 10 and 100 MHz. This way, the polarization or phase of the spatially modulated light field may be modulated (switched) between (at least) a first polarization and a second polarization or a first phase and a second phase.

Depending on the polarization or phase, the structured light field will be directed by the splitter to the first reflective SLM $110_1$ or to the second reflective SLM $110_2$. Lenses $111_{1\text{-}3}$ may be used to focus the spatially modulated light field as a plurality of focused laser beams onto the micromirrors of the reflective SLMs, wherein the illumination pattern determines which qubits are exposed to the focused laser beams. Thus, by switching the polarization of the structured light fields at a high frequency, the qubits in the qubit array may be addressed at a high frequency using different light patterns, e.g. a first light pattern and a second illumination pattern. Thereafter, the reflective SLMs may be configured according to a new set of illumination patterns followed by fast exposure of individual qubits to the new illumination patterns.

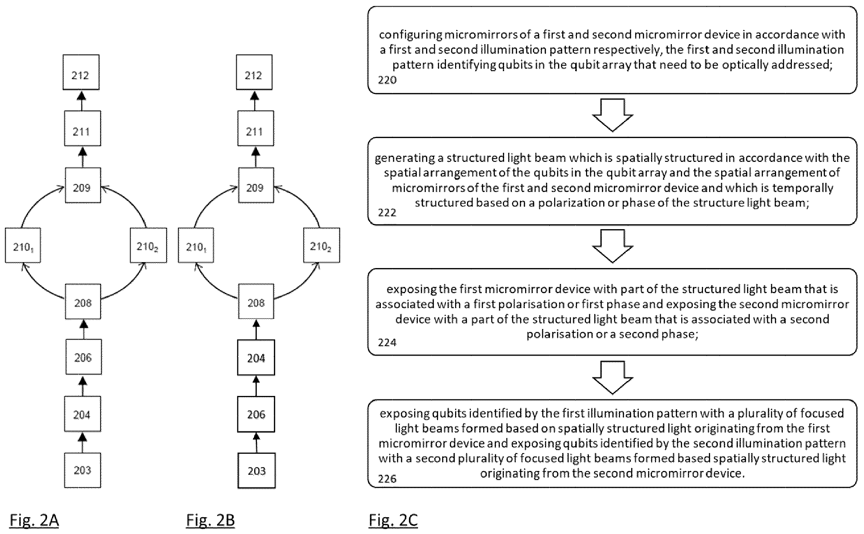

Fig. 2A, 2B and 2C depict systems and a flow chart illustrating examples of an optical addressing scheme as described in this application. As shown in Fig. 2A, the system may include an optical source system 203, e.g. a laser system, for generating a light beam of a certain central wavelength, a spatial modulator 204 for spatially modulating the light beam, a temporal modulator 206 for temporally modulating the light beam, a polarization or phase dependent splitter 208 for splitting the spatiotemporally structured light beam in to two spatially structured light beams, at least two computer-controlled micromirror devices $210_{1,2}$, an optical relay element 209 for relaying spatially modulated light from each of the micromirror devices towards a qubit array 212 and an optical system 211 for focusing the spatially modulated light as a plurality of focused light beams onto individual qubits of the qubit array. The system may be controlled by a computer (not shown) which may use illumination patterns identifying qubits in the qubit array that need to be addressed to control the micromirror devices in a similar was as described with reference to Fig. 1. The spatial modulator 204 and temporal modulator 206 may be used in either order, with either the spatial modulator 204 acting on the light first, as in fig. 2A, or the temporal modulator 206 acting on the light first, as in fig 2B. In other words the spatial modulator 204 may receive, preferably substantially all, the light from the optical source system 203, modulate the received light and output the modulated light towards the temporal modulator; or vice versa.

The micromirror devices $210_{1,2}$ may be configured as reflective SLMs that are based on arrays of addressable micromirrors. SLMs of this type are typically referred to as digital micromirror devices (DMDs). DMDs comprise micro-scale mirrors which can be deflected to redirect incident light towards a target ("on") or away from a target ("off"). The micromirrors may be controlled in a binary way, i.e. either "on" or "off". This way, small light beams can be directed towards and focussed onto individual qubits in the qubit array. DMDs have high switching times (in the order of tens of microseconds) and are thus suitable for fast programmable optical addressing of qubits. In an alternative example of the system in 2A and 2B, the system may not have two micromirror devices. There may only be one micromirror device, as described in examples elsewhere herein. In such examples a single micro-mirror device may receive substantially all, or over 50%, of the light output from the previous modulator in the sequential chain of modulators. The sequential chain of modulators directing light from one modulator to the next before outputting light towards the matter particles acting as qubits. Preferably each modulator in the chain is a different type of modulator, different 'types' may be different by any of, but not limited to: operating using a different physical principle; modulating at different speeds (modulates rates); different by the different output characteristics of the modulated light. Different output characteristics may include, but are not limited to: homogeneity of the output wavefront (i.e. shape of the phase-front of the modulated light); modulation rate; spatial extent of modulation intensity (for example different spatial portions of the total light output having different intensities perpendicular to the direction of propagation, such as that output by an array of individually controllable micro-mirrors of a DMD).

The one or more spatial light modulators for generating the spatiotemporally structured light beam may be based on a Liquid-Crystal type SLM, such as liquid-crystal on silicon (LCOS). Such an SLM may be configured as a transmissive or a reflective SLM. The pixels of these SLM may have many different settings to control the phase and/or amplitude of light. In contrast to DMDs, LC-based SLMs are rather slow (in the order of 100 Hz).

Fig. 2C depicts a flow chart of a method for optically addressing qubits of a qubit array that can be executed using a system as depicted in Fig. 2A or 2B. The method may include a step of configuring micromirrors of a first and second micromirror device based on addressing information defining qubits in the qubit array that need to be addressed at one or more different time instances (step 220). In an example, one or more illumination patterns may be used to define qubits in the qubit array that need to be addressed. An illumination pattern may represent information (in any form) which identifies which qubits in the qubit array need to be optically addressed at a certain time instance. Typically, an illumination pattern may define an arbitrary selection of qubits in the qubit array that need to be optically addressed simultaneously. The addressing information may be used by a computer to control the micromirrors of the micromirror devices. The addressing information, such as first and second illumination pattern may represent single and multi-qubit qubit operations. This way, a sequence of (pairs of) illumination patterns may represent qubit operations defining a quantum algorithm.

The method may further include a step of generating a structured light beam (step 222) wherein the structured light is spatially structured in accordance with the spatial arrangement of the qubits in the qubit array and the spatial arrangement of micromirrors of the first and second micromirror device. The structured light beam may also be temporally structured based on the polarisation, for example a first and second polarization.

In a further step, the first micromirror device may be exposed with part of the spatially structured light beam that is associated with the first polarization and the second micromirror device with a part of the spatially structured light beam that is associated with the second polarization (step 224). Hence, the micromirror devices are exposed based on the temporal polarisation of the structured light beam. The temporally structured light beam may be split using a polarisation splitter, which has an input for receiving the structured light beam and (at least) two outputs associated with structured light beam of the first polarization and the second polarisation. This way, the micromirrors can be alternately exposed by the structured light at a frequency that is directly linked to the temporal modulation frequency of the structured light beam.

In the final step (226), first qubits identified by the addressing information may be simultaneously exposed based on a first plurality of focused light beams formed on the basis of spatially structured light originating from the first micromirror device and second qubits identified by the addressing information may be simultaneously exposed based on a second plurality of focused light beams formed on the basis of spatially structured light originating from the second micromirror device.

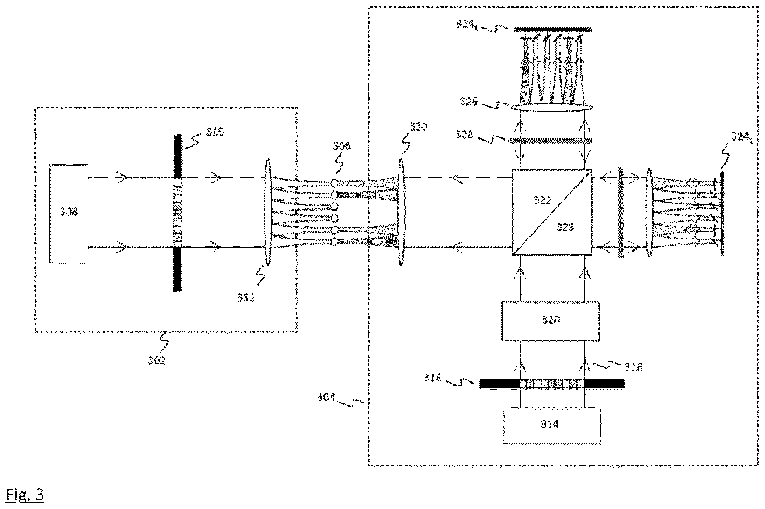

Fig. 3 depicts a system for optically addressing qubits of a qubit array according to an example. As shown in the figure, the system may include a trapping module 302 configured to optically trap qubits into a geometrical arrangement, e.g. a 2D array, of qubits. The system may further comprise an optical addressing module 304 configured to simultaneously and individually address different qubits in the array of qubits. The optical addressing module may be configured to expose individual qubits in the array of qubits 306 based on information defining qubits that need to be addressed. In an example, one or more illumination patterns may be used wherein each illumination patterns identifies qubits that need to be addressed optically. By exposing qubits in the array of qubits based on addressing information, e.g. different illumination patterns, a quantum algorithm may be executed.

As shown in the figure, the trapping module 302 may include a trapping laser system 308 for generating a laser beam to expose a first spatial light modulator 310 (SLM), e.g. a liquid crystal based SLM comprising pixelated liquid crystal light valves to spatially modulate light of laser beam, to form multiple microtraps for quantum particles, e.g. neutral atoms, in the focal plane of a lens 312.

The optical addressing module 304 may include a laser system 314 for producing a laser beam 316 for exposing a plurality of computer-controlled digital micromirror devices (DMDs) $324_{1,2}$, which are configured to project a predetermined spatially structured light beam onto the qubit array 306. Here, the spatial structure, i.e. the cross-sectional intensity profile, of the spatially structured light beam originating from a DMD may include one or more intensity profiles (preferably spatially separate) which may be focused onto individual qubits in the qubit array. In other words, the laser beam may be input to the DMD wherein the DMD controllably reflects different portions of the laser beam. The 'different portions' here relate to the spatial extent of the laser beam across the face of the DMD. The different spatial portions may each comprise a cross sectional intensity profile that has the same or a different shape to the other intensity profiles of the laser beam reflected from the other reflective elements of the DMD. For example, the intensity profiles may all be Gaussian. Alternatively, the intensity profiles of the beams may be super-Gaussian-like. One or more of the plurality of beams may have different intensity profiles.

To that end, each DMD includes an array of electronically configurable micromirrors which are optically aligned with the qubit array. This way, a first DMD $324_1$ may be configured on the basis of addressing information, e.g. a first illumination pattern, to project a spatially structured light beam comprising one or more first spatial modes for qubits that need to be addressed onto the qubit array and the second DMD may be configured on the basis of addressing information, e.g. a second illumination pattern, to project a spatially structured light beam comprising one or more second spatial modes for qubits that need to be addressed onto the qubit array. Here, the first and second illumination pattern may identify qubits in a qubit array that need to be optically addressed in order to execute operations of a quantum circuit.

The optical addressing module 304 may further include an optical system configured to expose the qubit array to spatially modulated light originating from different micromirror devices at a high frequency, i.e. frequencies between the 10 MHz up to 1 GHz or even higher. To that end, the optical system may include an arrangement of lenses, quarter-wavelength plates, electro-optical modulator(s) (EOMs) and/or beam splitters. In particular, the optical system may include a second liquid-crystal based spatial light modulator (SLM) 318, e.g. a transmissive or reflective liquid-crystal based SLM for generating a spatially structured light beam that can be used for exposing the micromirror devices with an array of focused light beams. To that end, the spatial structure of the spatially structured light beam may have a cross-sectional intensity profile comprising modes that can be projected onto the micromirrors of the micromirror devices. The optical system may further include a temporal modulator for temporally modulating the spatially structured light beam. In an example, the temporal modulator may be an electro-optic modulator (EOM) 320 configured to modulate the phase or the polarization, e.g. a first polarization orientation and a second polarization. The EOM, or alternatively AOM, may be driven by a high frequency signal to switch the EOM between the different polarization or phase states. A beam splitter 322, optically aligned with a first DMD and a second DMD, may be exposed to the polarized modulated laser beam so that depending on the polarization of the modulated light, either the first DMD or the second DMD is exposed with an array of focused light beams. This way, the qubit array is exposed at high frequencies to different illumination patterns.

The addressing modules described with reference to the examples may be used for executing different addressing schemes. For example, the light of a light beam that is focused onto a qubit using the optical addressing module, may directly (resonantly) interact with the qubit. This type of optical qubit addressing may be referred to as spatial addressing. In another example, the light of a light beam that is focused onto the qubit using the optical addressing module may shift the addressed qubit off-resonant. This way, the qubit is effectively "masked" from exposure to a further light beam, e.g. masked from a global laser beam that has a spot larger than one or more qubits so that it addresses a plurality of qubits simultaneously (for example to perform single qubit angle rotation operations). Hence, in this addressing scheme, referred to as spectral addressing, certain qubits in the qubit array are individually addressed by focused light beams of the optical addressing module, so that these addressed qubits are put in an off-resonance state, so that these addressed qubits do not resonantly interact with a subsequent light beam.

In contrast to prior art schemes, the optical addressing module provides a fast programmable and scalable optical addressing scheme for individually exposing qubits in a qubit array based on different illumination patterns. An optical switch based on an electrooptical modulation device provides high frequency switching between exposure to at least two differently spatially modulated light beams originating from at least two micromirror device which are configured based on different illumination patterns. Qubit operations including single and multi-qubit gate operations of a quantum circuit can be easily encoded into a plurality of illumination patterns which can be simply implemented by programming the DMDs accordingly.

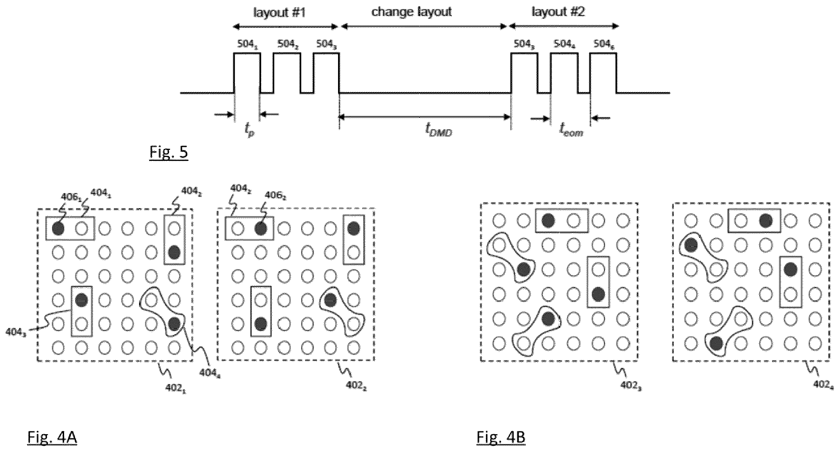

Fig. 4 and 5 depict the use of addressing information in the form of different illumination patterns to expose an array of atomic qubits according to an example. Fig. 4A shows a schematic of the execution of quantum gates by exposing a qubit array using two different illumination patterns $402_{1,2}$, which are configured to identify qubits of qubit pairs which are to be individually addressed by a laser beam. For example, the first and second illumination pattern $402_{1,2}$ illustrate four different qubit pairs $404_{1-4}$ wherein the first illumination pattern identifies one qubit (black dots) of each of the qubit pairs that need to be optically addressed by simultaneously and individually exposing these addressed qubits with a focused laser beam using the optical addressing schemes described in this application. The second illumination pattern $402_2$ identifies the other four qubits of the four qubit pairs that need to be addressed. Thus, using two illumination patterns four different qubit gate operations of a quantum circuit can be efficiently executed in parallel. This way, the illumination patterns may form a first layout of quantum gate operations. After execution of the first gate layout, such as that in fig. 4A, a new second gate layout defined by a third and fourth illumination patterns $402_{3,4}$ may be selected, as shown in Fig. 4B, and used by the computer to configure the micromirrors of the micromirror devices.

Fig. 5 schematically illustrates a timing diagram of the qubit addressing according to an example. As shown in this figure, the micromirror devices of the optical addressing module may be configured based on a first layout (layout #1, on the left of fig. 5) comprising a plurality of illumination patterns (which may correspond, for example, to illumination patterns $402_{1,2}$ as illustrated in Fig. 4A). Then, individual qubits in the qubit array may be alternately addressed based on a first and second illumination pattern at a frequency that is determined by the frequency of the temporal modulation of the light beam that is used to drive the micromirror devices. As shown in Fig. 5, the qubits in the qubit arrays may be optically addressed based on the first illumination pattern $402_1$, the second illumination pattern $402_2$ and again the first illumination pattern $402_1$, by light pulses $504_{1-3}$. This way, the qubits may be exposed to light pulses having a pulse duration $t_p$ and a pulse frequency that is based on the switching time of the temporal light modulator $t_{eom}$. Such an optical addressing scheme may be used to execute gate operations, such as a CNOT gate based on interactions between nearby qubits that are in the Rydberg state. In that case, both the first qubit (control) and the second qubit (target) may be in the Rydberg state. When optically addressing the first qubit with a $\pi$ pulse, the second qubit with a $2\pi$ pulse and finally addressing the first qubit again with a $\pi$ pulse, the state of the target qubit will flip if and only if the control qubit is in the state $|1\rangle$. The CNOT gate and other examples are described in more detail in the article by Henriet et al, Quantum computing with neutral atoms, quantum journal, 2020-09-21, volume 4, page 327 which is hereby incorporated by reference.

After execution of the gate operations, the micromirror devices may be configured based on a further layout. The switching to a new second layout (layout #2) may be realized by configuring the micromirrors of the micromirror devices based on two further illumination patterns, e.g. a third illumination pattern $402_3$ and a fourth illumination pattern $402_4$ as illustrated in figure 4B. The switch to the new layout will be determined by the switching time of the micromirror devices $t_{DMD}$. Then, after configuring the micromirror devices, the qubits may be exposed based on the new illumination pattern which may for example define further two-qubit gate operations, which can be executed by optically addressing the qubits based on the third illumination pattern $402_3$, the fourth illumination pattern $402_4$ and again the third illumination pattern $402_3$ by light pulses $504_{4-6}$.

It is submitted that the illumination patterns and gate operations described with reference to Fig. 4 and 5 are non-limiting examples to illustrate the advantages of the methods and systems described in the application. The optical addressing schemes have wide application in control or gate operations and can used for any quantum gate operation involving optical addressing based on optical fields alone or optical addressing based on optical field in combination with microwave fields.

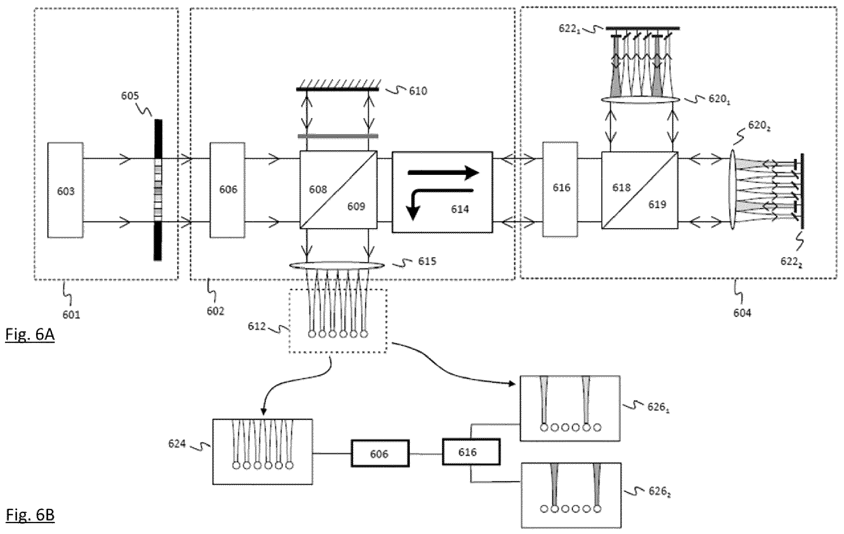

Fig. 6A and 6B illustrate a system for optically addressing qubits of a qubit array according to another example. As shown in Fig. 6A, the system includes a trapping module 602 configured to optically trap qubits to form an array of qubits 612 and an optical addressing module 604 which is configured to generate different illumination patterns for simultaneously and individually exposing different qubits in the array of qubits 612. Similar to the system of Fig. 3, the optical system is configured to expose the qubit array to spatially modulated light originating from different micromirror devices at a high frequency. In Fig. 6 however, the trapping module and the optical addressing module do not have separate light source systems. Instead, one light source system 601 is used to produce a structured light beam for both the trapping module 602 and the optical addressing module 604.

The optical addressing module 604 may include a first temporal modulator 616 for temporally modulating a light beam that is input to the module. The temporal modulator may be implemented on the basis of an electro-optical modular (EOM) as explained with reference to Fig. 1 and 3. The optical addressing module may further include a beam splitter 618 for splitting a structured light based on polarization or phase and for projecting light beams onto the micromirror devices, an optical relay element 619 for receiving a spatially modulated light beam originating from the micromirror devices and relaying the spatially structured light beam towards the qubit array, at least two computer-controlled micro-mirror devices $622_{1,2}$ and a lens system $620_{1,2}$ associated with the micromirror devices and the beam splitter for focusing structured light onto the micromirror devices and for receiving spatially structured light reflected by the micromirror devices. The optical addressing module 604 may be controlled by a computer (not shown) in a similar way as described with reference to Fig. 1-4 above.

As shown in figure 6, the light source system 601 may include a light source 603 and a liquid-crystal type spatial light modulator 605 to produce a spatially structured light beam, which is input to the trapping module 602. The trapping module may include an electro-optical modulator (EOM) 606 configured to polarize the light of the beam either into a first or second polarization direction. An optical system may be configured to direct the spatially structured light beam on the basis of the polarization either towards the qubit array 612 or towards the input of the optical addressing module 604. To that end, trapping module 602 may comprise a splitter 608 and an optical relay element 609 which may redirect structured light of a first polarization direction via one or more reflective and/or refractive elements towards a lens system 615 which is configured to generate a plurality of focused trapping beams (optical tweezers) for optically trapping the atomic qubits. For the structured light of a second polarization direction, the structured light is redirected towards the input of the optical addressing module. A further optical element 614, e.g. a circulator, may be used to forward and/or redirect spatially structured light originating from the optical addressing module 604 towards the qubit array 612.

Hence, the system allows fast switching between either the optical trap module 602 or the optical addressing module 604. The result of this is schematically shown in Fig. 6B, wherein depending on the polarization state of electro-optical modulator 606, the qubit arrays are either manipulated based on the optical tweezers of the optical trapping module (as depicted in the inset of 624) or qubits are optically addressed based on focused light beams using different illumination patterns (as depicted in the insets of $626_{1,2}$)

The following example systems may be used within an optical addressing module and/or a trapping module such as those described within the systems of Fig. 1, 3 or 6.

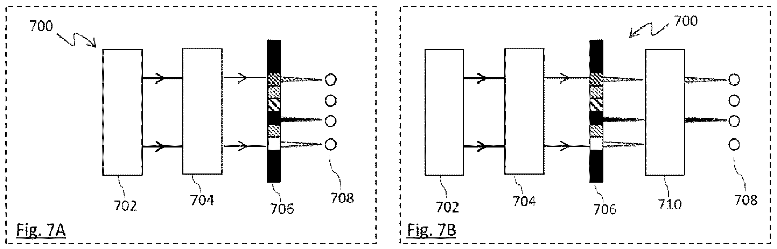

Figures 7A and B show schematics of an example system 700 for addressing or trapping matter particles acting as qubits, comprising an electromagnetic radiation source 702, a temporal modulator 704, a spatial modulator 706, and a plurality of matter particles 708 for use in a quantum computation. The system 700 may further comprise a plurality of lens systems (not shown) between or combined with any of the components of the system. The lens systems may include any combination of, but are not limited to, any one or more of lenses, mirrors, collimating optics, beam stops and/or apertures.

The figures show an electromagnetic (EM) radiation source 702 which outputs EM radiation towards a temporal modulator 704. The EM source 702 may be a laser system. The EM source 702 may emit coherent optical light, such as a laser beam. The EM source 702 may emit multimode EM radiation, such as a multimode laser. The temporal modulator 704, in this example, may globally modulate the amplitude or the intensity of the laser beam i.e., the temporal modulator may act over the majority of the cross section of the laser beam. The temporal modulator 704 may receive substantially all the EM radiation from the EM source 702, accounting for losses. The temporal modulator 704 may be an electro-optic modulator (EOM). The temporal modulator 704 may be an acoustic optical modulator (AOM). The temporal modulator 704 may be controlled by a high frequency control signal so that the EM radiation may be modulated (switched/changed) at high frequencies. For example, the frequency of the modulation may be between 10 and 1000 MHz. The temporal modulator 704 may be configured to modulate the EM radiation within the computation time of the quantum computer. In other words, the modulation frequency of the temporal modulator may be fast enough to change the modulation of the EM radiation before the decoherence time of the quantum system. The minimum temporal modulation time period may be less than the time period of the quantum computation.

Figures 7A and B show a spatial modulator 706 which is exposed to the temporally modulated light. For example, the spatial modulator 706 may be a spatial light modulator (SLM). The spatial modulator 706 may be a liquid-crystal SLM, such as liquid-crystal on silicon (LCOS). The SLM may modulate the phase of the input temporally modulated light. In an example, the spatial modulator 706 may be an acousto-optic modulator (AOM) or an acousto-optic deflector (AOD). The spatial modulator 706 may be configured as a transmissive or reflective light modulator. The modulation frequency of the spatial modulator may be slow in comparison to the modulation frequency of the temporal modulator, for example, the modulation frequency of the spatial modulator may be of the order of 100 Hz. Due to a relatively slow modulation frequency, the modulation of the spatial light modulator may be considered static during the quantum computation. Each of the pixels of the spatial modulator may have different settings to control the phase and/or amplitude of the output EM radiation. For example, the intensity of each output beam of EM radiation may be independently controlled. The intensity of each of the EM beams may be controlled based on addressing information, as described elsewhere herein. The ability to alter the intensity of each radiation spot in the interaction region, formed by each EM beam, may reduce or eliminate the need to adjust the position of the EM beams.

The output EM radiation from the spatial modulator 706 is directed towards the matter particles 708. The spatial structure of the spatially structured EM radiation may have a cross-sectional intensity profile comprising modes that are received by a lens system/apparatus (not shown). The lens system may be used to focus the spatially modulated EM radiation as a plurality of focused beams. The plurality of matter particles 708 may be in an interaction region which may be positioned at the focal plane of the lens system. Additionally, or alternatively, the interaction region may be positioned at one or more Talbot planes of the system. For example, if a lens used comprises a plurality of microlenses, for example a micro-lens array, the microlenses may represent a grating giving rise to a plurality of talbot planes. Figure 7A shows the EM radiation output from the spatial modulator 706 as three different beams, with different shading representing differently modulated light. Only three beams are shown for clarity in the figure. There may be a beam for each matter particle 708 in the quantum computation, or fewer. More than one matter particle may be interacted with, i.e., exposed to an EM beam, at the same time. The output EM beams may form EM radiation spots in an interaction region for interacting with the plurality of matter particles 708. The radiation spots may also be referred to as EM intensity distributions. The spatial modulator 706 may generate a spatial pattern of spatially separated EM intensity distributions in the interaction region. The generated spatial pattern may be an arbitrary non-uniform pattern. The EM intensity distributions may overlap. Each of the EM intensity distributions may have a distinct position, i.e. the centre of the EM distributions may not coincide with each other. The combination of the temporal and spatial modulator in system 700 enables independently controlled and efficient addressing of multiple individual qubits, simultaneously or consecutively.

The system 700 may comprise a further spatial modulator 710, as shown in figure 7B. This further spatial modulator 710 may be positioned between the first spatial modulator 706 and the plurality of matter particles 708. The array of spatially structured EM beams generated by the first spatial modulator 706 may be used to expose the further spatial modulator 710 via one or more reflective and/or refractive elements in a lens system (not shown). The first spatial modulator 706 may give a spatial structure to the EM radiation so that it has a two-dimensional grid-like intensity profile, or pattern, that matches a grid of reflective elements on the further spatial modulator 710. The further spatial modulator 710 may reflect part of the spatially structured light towards the array of matter particles. The further spatial modulator 710 may give a spatial structure to the EM radiation so that one or more further optical elements (not shown), such as refractive and/or diffractive optical elements, may be used to focus the spatially modulated light originating from the further spatial modulator 710 into a plurality of light beams, wherein each of the plurality of light beams is focused onto a matter particle 708 acting as a qubit in the qubit array.

The further spatial modulator 710 may be a reflective spatial light modulator. The further spatial modulator 710 may be a micromirror device, as described elsewhere herein. The micromirror device 710 may be configured as a reflective SLM that is based on an array of addressable micromirrors, such as a matrix of MEMS, or a MEMS based digital micromirror device (DMD). DMDs comprise electronically configurable micro-scale mirrors which can be deflected to redirect incident light towards a target ("on") or away from a target ("off"). The micromirrors may be controlled in a binary way, i.e. either "on" or "off". The reflective elements of the micromirror device 710 may be independently controlled to direct the EM beams from the first spatial modulator 706 towards the matter particles 708 ("on"), or controlled to direct the EM beams away from the matter particles ("off"). The micromirror device 710 may be controlled by a computer (not shown). The micromirrors of the reflective SLM 710 may be controlled by the computer according to addressing information that identifies different qubits in the qubit array that need to be optically addressed. The computer may configure the micromirrors, or reflective elements, of the micromirror device based on the addressing information at predetermined time instances, e.g. at a frequency which can be handled by the micromirror device. In an example, the micromirror device may be a MEMS based DMD which has switching times of tens of microseconds, i.e., a switching frequency up to 100 kHz. The DMD may be configured to switch the direction of an EM radiation beam within the computation time of the quantum computer, i.e., before the decoherence time of the quantum register.

The combination of a fast temporal modulator, such as an EOM or AOM, with a slow spatial modulator, such as a liquid crystal SLM, enhances the control of the EM radiation (light) used in the quantum system throughout the quantum computation period. The addition of a further fast programmable spatial modulator, such as a DMD, further enhances the control of the EM radiation, and may enable the system to be compatible for use in digital as well as analog quantum computing.

The apparatus for delivering the EM radiation and forming the regions of EM radiation may comprise one or more components for guiding and/or focussing and/or collimating the EM radiation. Preferably a plurality of components are used to perform this function. The plurality of components may include, but is not limited to, any one or more: lenses and/or mirrors and/or aperture stops for forming the EM regions. These components may be integrated-optic or, preferably, bulk-optic components. A collection of bulk optic components may be used in the apparatus to receive light from the EM sources.

The modulated EM radiation output by any or all of the modulators 704, 706, 710 in system 700 may be controlled based on addressing information. Addressing information may define qubits in a qubit array that need to be optically addressed for the quantum computation. The qubits in the qubit array may need to be addressed for one or more of, but not limited to, the following purposes calibration: control, off-resonance, trapping, single gate operation, multi gate operation. The modulators may be controlled by a computer (not shown) according to the addressing information. The addressing information may further define the how to modulate the EM radiation to which each qubit in the quantum array is exposed. Different qubits identified by the addressing information may addressed with differently modulated EM beams. For example, in figures 7A and 7B, a plurality of focused EM beams are generated wherein each focused EM beam addresses a different matter particle 708, and each EM beam has been modulated differently. The EM beams may be modulated differently or similarly. The modulation of each of the EM beams may be independently controlled.

The system 700 can be used for either trapping matter particles 708 in the interaction region, or may be used to control quantum state transitions, depending on the wavelength of the radiation from the EM radiation source. Two or more of the example systems may be used in combination. For example, one such system 700 may be used as part of the optical addressing module of figure 3 or 6, while another such system 700 may be used as part of the trapping module of figure 3 or 6.

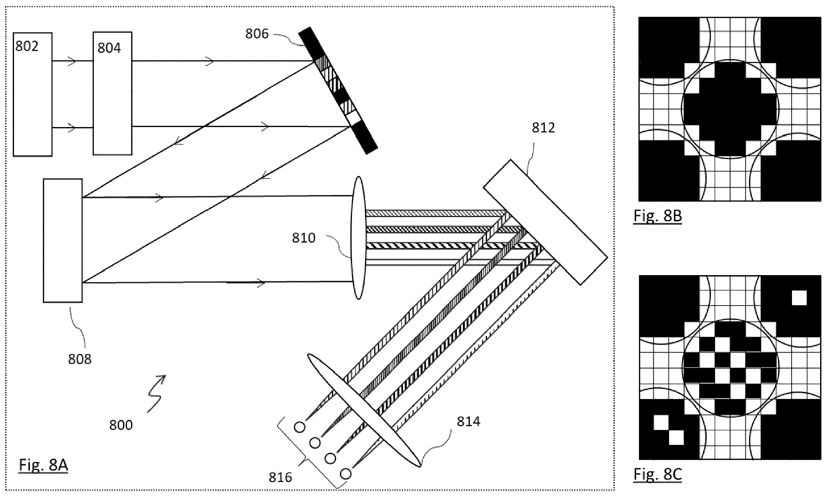

Figure 8a shows a further example of an apparatus 800 for outputting EM intensity distributions in an interaction region containing matter particles. Preferably the matter particles are neutral atoms. The apparatus 800 may be used in methods and systems described herein. One or more EM sources 802, such as a laser, outputs EM radiation. Herein forwards, for this example, the EM source will be referred to as a laser. The EM radiation is typically continuous wave (CW) radiation of a duration the same as or longer than the quantum computation time period and at least covering the same absolute time as the time over which the computation runs. The EM radiation may be of any suitable wavelength including any of the wavelengths described in other examples herein. The EM radiation may have a wavelength for use in trapping the matter particles.

Additionally, or alternatively, the EM radiation may be used for transitioning one or more of the matter particles from a first atomic state to a second atomic state, for example by being at or near the resonance of the transition. The EM radiation may be used for preventing the transitioning of one or more of the matter particles from a first atomic state to a second atomic state, this may be referred to as anti-addressing. An example of a transition may be from a ground state to a Rydberg state.

The drawings in figure 8a may be adapted to include further components needed for the apparatus to work. For example, in some implementations the apparatus further comprises components such as optical components, such as lenses, mirrors, collimating optics, beam stops, apertures. Further components required for a quantum computation are also not shown, such as but not limited to: a vacuum chamber and its associated running equipment such as electronic controllers, user interfaces and vacuum pumps. Furthermore, other EM radiation may be incident upon the matter particles such as but not limited to EM radiation for any of: trapping; anti-addressing; addressing the matter particles.

The EM radiation output from the laser is input into a first modulator 804. The EM radiation is typically collimated before being input into the first modulator 804. The first modulator is a modulator for temporally modulating the EM radiation within the computation time period. The modulation is intensity modulation in this example, although other modulation types may be used. Preferably the EM radiation is modulated from a first modulation state to a second modulation state within the quantum computation time period. Both states are those required by the computation. Preferably the first modulator 804 modulates at speeds such that getting from the first state to the second state may be between any of: 1-100ns, 1-50ns. Other ranges may also apply. Preferably the first modulator is an electro-optic modulator (EOM). Preferably the first modulator 804 receives substantially all the EM radiation from the laser 802 (factoring in component, propagation and coupling losses).

The EM radiation output from the first modulator 804 is input into a second modulator 806. Preferably the EM radiation is collimated. This further modulator 806 is an SLM in this example. The SLM is preferably a liquid crystal SLM wherein the wavefront of the input EM radiation is transformed into a different shaped wavefront on exit by virtue of phase changes in the SLM. The output radiation is reflected off a mirror 808 and input into one or more focussing elements 810 (such as a lens or lens system described elsewhere) which transforms the phase-modulated EM radiation wavefront into a plurality of spatially separate EM radiation intensity distributions. Along the EM radiation path (or 'optical path' for optical wavelengths) between the focussing element/s 810 and a further one or more focussing elements lens 814, is a further modulator 812. This further modulator 812 comprises a plurality of controllably moveable mirrors that are each independently controllable. This modulator may comprise one or more micro electro-mechanical systems, such as DMDs. The apparatus is configured (hence, for example, with component positioning and focussing component strengths) such that each portion of the EM radiation (beam) intended for a particular single EM intensity distribution (spot) in the interaction region is incident on a plurality of mirrors. For example, figure 8B shows a schematic of a section of an array of micromirrors. The circles in the figure are merely indicative of the plurality of mirrors that may correspond to each intensity distribution or radiation spot in the interaction region. The black squares represent mirrors which direct light towards the interaction region, while the white squares represent micromirrors which direct light away from the interaction region.

An advantage of this example is that the apparatus can further control the intensity of the EM distribution by switching different mirrors to the ON or OFF position (where 'ON' directs EM radiation to the interaction region and OFF direct it away from the interaction region). This gives an extra degree of freedom to form the intensity distribution. Preferably, the area of the DMD allocated for a particular intensity distribution is larger than the intensity distribution area about the image plane of element 814. When the EM radiation is focussed into the 'spot' in the interaction region, the pattern of the mirrors that were turned ON/OFF may not be realised in the 'spot' at least because of the diffraction limiting effects of the element 814. In some examples, the mirrors may take a checkerboard pattern with ½ or the mirrors ON and ½ of the mirrors OFF to give that particular spot 50% of the intensity it would have had if all the mirrors were ON. Other mirror ON/OFF ratios (in terms of numbers ON/OFF per spot) may be used. For example, figure 8C shows a central 'spot' with one third of the mirrors switched to OFF (white), which would reduce the intensity of the radiation spot by one third. In this manner, the intensity of each spot can be independently controlled by the DMD, in addition to the independent control offered by the spatial modulator 806. For example, figure 8C also shows partial spots with only one or two of the plurality of mirrors turned to OFF.

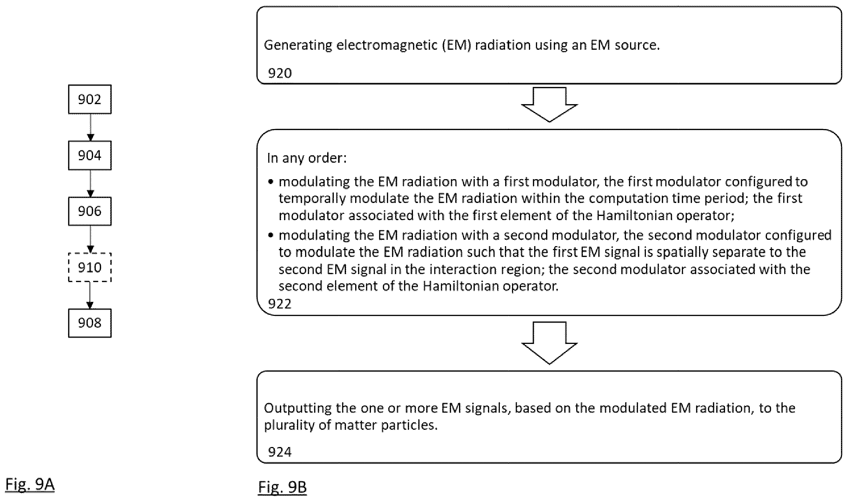

Fig. 9A and 9B depict a system and a flow chart illustrating an example of an addressing scheme as described in this application. As shown in Fig. 9A, the system may include an electromagnetic (EM) source system 902, e.g. a laser system, for generating an EM beam of a certain central wavelength, a temporal modulator 904 for temporally modulating the light beam, a spatial modulator 906 for spatially modulating the light beam, and an optional micromirror device 910, all for modulating the EM radiation directed towards a plurality of matter particles 908 acting as a qubit array. The system may comprise lens systems (not shown) for focusing/collimating the EM radiation, for example, for focusing spatially modulated light as a plurality of focused light beams onto individual qubits of the qubit array. The system may be controlled by a computer (not shown) which may use addressing information to identify qubits in the qubit array that need to be addressed and to control the modulators 904, 906, 910 in a similar way as described with reference to the figures.

Fig. 9B depicts a flow chart of a method for outputting EM signals for interacting with spatially separated matter particles in an interaction region that can be executed using a system as depicted in fig 9A. The method may include a step of generating EM radiation using an electromagnetic (EM) source (step 920). The method may further include a step of, in any order: modulating the EM radiation with a first modulator configured to temporally modulate the EM radiation within the computation time period; and modulating the EM radiation with a second modulator configured to modulate the EM radiation such that a first EM signal is spatially separate to a second EM signal in the interaction region (step 922). The first modulator may be associated with a first element of a Hamiltonian operator, and the second modulator may be associated with a second element of the Hamiltonian operator. In the final step (step 224), the one or more EM signals, which are based on the modulated EM radiation, may be output to the plurality of matter particles.

It is submitted that the examples in this application are not limited to the figures. For example, while the figures illustrate optical addressing of a two-dimensional arrangement of qubits, the optical addressing schemes can also be used to address one-dimensional (1D) or three-dimensional (3D) arrays of qubits. Further, while the figures show examples of zero, one or two micromirror devices, more than two micromirror devices which are configured based on different illumination patterns may be used as well.

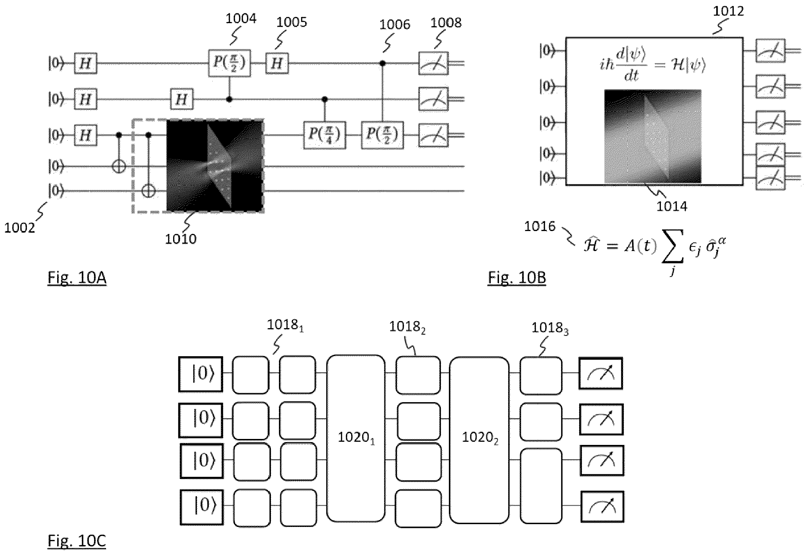

Figures 10A, 10B and 10C show examples of qubit operations which may be executed using the optical qubit addressing schemes described with reference to the examples. Unitary operators can be decomposed in two different kinds of operations: digital or analog. Both of these operations are transformations in the quantum Hilbert space over atomic states. Fig. 10A depicts the digital mode of operation of an atomic quantum register using a "digital" quantum circuit, wherein focused light beam pulses of a predetermined duration may be used to individually address atomic qubits 1002 to effectuate transitions between atomic states which effectively implement sets of standardized or 'digital' gates 1004, 1005, 1006 on computational states followed by one or more readout operations 1008 to readout the final state of the quantum register. These digital gates may include any single-qubit operation 1004, 1005 for example: rotations, Pauli gates such as Pauli-X, Pauli-Y and Pauli-Z gates or a Hadamard gate. Additionally, such digital gate operations may also include two-qubit gates 706 such as controlled NOT or controlled Z gates or multi-qubit operations such as Toffoli gates.

Fig. 10B depicts the analog mode of operation of an atomic quantum register, wherein a global laser light pulse, or sequence of global pulses, may be applied to one or more groups of atoms (or even all atoms) at the same time (as shown in the inset 1014), with certain properties like detuning, Rabi frequencies and Rydberg interactions to cause multi-qubit entanglement thereby effectively driving the evolution of a Hamiltonian 1012, 1016 of the atomic array in an analog way. The combined quantum wavefunction evolves according to Schrödinger's equation, and particular, unitary operators $\hat{U} = e^{-i\hat{\mathcal{H}}t}$, where $\hat{\mathcal{H}}$ denotes the Hamiltonian and $t$ the time, can be designed by pulse-shaping the parametrised coefficients of the Hamiltonian in time. This way, a parametric analog unitary block can be applied, which entangles the atoms and can act as a variational ansatz, or a feature map, or other entanglement operation. In Fig. 10B, the global laser light pulse may be a laser beam which is configured to expose a group of qubits or even all qubits in the quantum array. In an example, the optical addressing module may be used to controllably generate a plurality of light beams to globally address one or more qubits, for example a large group of qubits, so that multi-qubit entanglement between the addressed qubits is achieved. To that end, one or more illumination patterns identifying the qubits that need to be optically addressed may be used by the computer to control the optical addressing module.

In an example, the parametrised coefficients of the Hamiltonian may correspond to the components of a system presented herein, such as system 700. The system depicted in figure 7A may correspond to a Hamiltonian operator in the form of:

$$\hat{\mathcal{H}} = A(t) \sum_j \epsilon_j \, \hat{\sigma}_j^{\alpha}$$

$$(1)$$

wherein $\hat{\mathcal{H}}$ represents the Hamiltonian experienced by the qubits in the qubit array, $A(t)$ represents the modulation by the temporal modulator 704 with respect to time $t$, $\varepsilon_j$ represents the modulation by the first spatial modulator 706 applied to qubit $j$ 708, and $\hat{\sigma}_j^\alpha$ represents a Pauli matrix where $\alpha$ is either $x$ or $z$ for resonant or off-resonant beams respectively.

For resonant beams, $\alpha$ may also be $y$. The three coefficients ($A(t)$, $\varepsilon_j$, $\hat{\sigma}_j^\alpha$ ), or elements, of the Hamiltonian in equation (1) may be multiplicative elements. The Hamiltonian operator may be configured so that, for each qubit $j$, the coefficient (element) corresponding to the first spatial modulator 706 is multiplied with the respective Pauli matrix. The coefficient corresponding to the first spatial modulator 706 may have a different value for each qubit $j$. The product of the coefficient corresponding to the first spatial modulator 706 and the respective Pauli matrix is summed over all of the qubits $j$ in the qubit array. The Hamiltonian operator may be further configured to multiply the coefficient that corresponds to the temporal modulator 704 with the summation. The coefficient (element) that corresponds to the temporal modulator 704 may vary with respect to time $t$ during the quantum computation. In an example, the coefficient corresponding to the first spatial modulator 706 may be constant with respect to time $t$ during the quantum computation. The coefficient corresponding to the spatial modulator 706 may change between computational sequences. The rate of change of $\varepsilon_j$ may be 10 Hz. Alternatively, the coefficient corresponding to the first spatial modulator may vary with respect to time $t$ during the quantum computation, and therefore be dependent on $t$.

The system depicted in figure 7B may correspond to a Hamiltonian operator in the form of:

$$\widehat{\mathcal{H}} = A(t) \sum_j h_j(t)\epsilon_j \, \hat{\sigma}_j^\alpha$$

$$(2)$$

wherein $\widehat{\mathcal{H}}$ represents the Hamiltonian experienced by the qubits in the qubit array, $A(t)$ represents the modulation by the temporal modulator 704 with respect to time $t$, $\varepsilon_j$ represents the modulation by the first spatial modulator 706 applied to qubit j 708, $\hat{\sigma}_j^\alpha$ represents a Pauli matrix where $\alpha$ is either $x$ or $z$ for resonant or off-resonant beams respectively, and wherein $h_j(t) = 0,1$ and represents the modulation by the further spatial modulator 710 with respect to time $t$. For resonant beams, $\alpha$ may also be $y$. The four coefficients ($A(t)$, $h_j(t)$, $\varepsilon_j$, $\hat{\sigma}_j^\alpha$ ), or elements, of the Hamiltonian in equation (2) may be multiplicative elements. The Hamiltonian operator in equation (2) may be configured similarly to the Hamiltonian operator in equation (1), with an additional coefficient (element) to represent the modulation by the further spatial modulator 710. The further spatial modulator 710 may be associated with a plurality of elements in the Hamiltonian, each associated with a different micromirror, each associated with a different qubit $j$. The Hamiltonian operator may be configured so that, for each qubit $j$, the coefficient corresponding to the further spatial modulator 710 is multiplied with the respective coefficient for the first spatial modulator 706 and the respective Pauli matrix. The result of the multiplication is summed over all of the qubits $j$ in the qubit array. The coefficient (element) that corresponds to the further spatial modulator 710 may vary with respect to time $t$ during the quantum computation.

Since the Hamiltonian comprises multiplicative elements, when adjusting the weights of each element of the Hamiltonian, provided by each of the modulators, the outcome may be a spatially weighted temporal modulation. In other words, there may be an intensity ramp applied to each qubit $j$ (for example each atom), and the slope of the intensity ramp may be independent controlled for each qubit. The slope of the intensity ramp may be different for each qubit.

The digital and analog modes can be combined or alternated, to yield a combination of the effects of each mode. Fig. 10C depicts an example of such a digital-analog quantum circuit, including blocks $1018_{1-3}$ of digital qubit operations (single or multi-qubit) and analog blocks $1020_{1,2}$ It can be proven that any computation can be decomposed into a finite set of digital gates, including always at least one multi-qubit digital gate (universality of digital gate sets). This includes being able to simulate general analog Hamiltonian evolutions, by using Trotterization or other simulation methods. However, the cost of Trotterization is expensive, and decomposing multi-qubit Hamiltonian evolution into digital gates is costly in terms of number of operations needed.

Digital-analog circuits define circuits which are decomposed into both explicitly-digital and explicitly-analog operations. While under the hood, both are implemented as evolutions over controlled system Hamiltonians, the digital circuits form a small set of pre-compiled operations, typically but not exclusively on single-qubits (as depicted in Fig. 10A), while analog circuits are used to evolve the system over its natural Hamiltonian (as depicted in Fig. 10B), for example in order to achieve complex entangling dynamics.

It can be shown that complex multi-qubit analog operations can be reproduced/simulated only with a relatively large number of digital gates, thus posing an advantage for devices that achieve good control of both digital and analog operations, such as an atom quantum register. Entanglement can spread more quickly in terms of wall-clock runtime of a single analog block compared to a sequence of digital gates, especially when considering also the finite connectivity of purely digital devices. In order to transform the internal states of these modes, a classical control stack may be used to send information to optical components and lasers. The controller may formulate the programmable unitary transformations in a parametrized way. At the end of the unitary transformations, for example, the states of one or more atoms may be read out by applying measurement laser pulses, and then observing the brightness using a camera to see which atomic qubit is turned 'on' or 'off', 1 or 0. Other methods for reading the states of the atoms may be used. This bit information across the array may then be processed further.

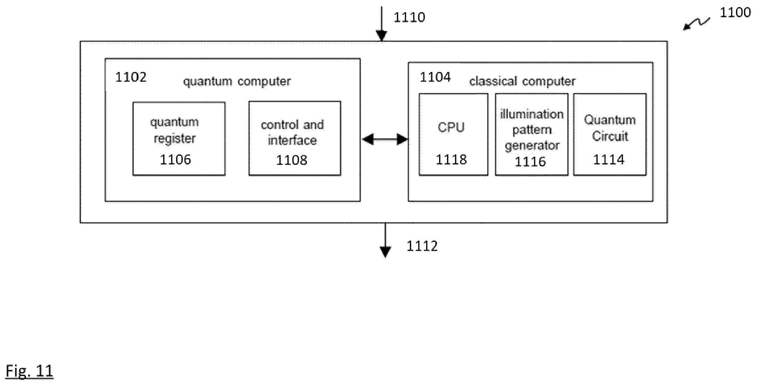

Fig. 11 depicts a computer system 1100 comprising a classical computer 1104 and a quantum computer system 801102, comprising an atomic qubit register, including optical qubit addressing schemes as described with reference to the examples in this application. Such a computer system may be referred to as a hybrid computer system. As shown in the figure, the quantum computer system may comprise one or more quantum registers 1106, e.g. a gate-based qubit quantum register. Such a quantum register may also be referred to as a quantum processor or a quantum processing unit (QPU). The system 1100 may further include a classical processor 1118, e.g. a CPU and optionally one or more GPUs connected to a memory storage for storing a representation of a quantum algorithm, e.g. in the form of a quantum circuit 1114 comprising gate operations that need to be executed on qubits of the quantum register.

A quantum circuit may represent a set of instructions sent by a classical computer to the quantum computer to execute 'gate operations' or 'unitaries' on qubits and to prepare qubits for execution and readout of such gate operations. The execution of a quantum circuits involves a sequence of operations executed on the quantum registers by a controller system 1108 comprising input output (I/O) devices which form an interface between the quantum register and the classical computer. For example, the controller system may include an optical and/or electromagnetic pulse generating system for generating pulses, e.g. optical, voltage and/or microwave pulses, for applying gate operations in accordance with the quantum circuit to the qubits of the quantum register.

The controller system 1108 may be configured to control an optical addressing module as described with reference to the examples. To control the optical addressing module the system may include an illumination pattern generator 1116 configured to transform operations, e.g. gate operations and operations required to control (e.g. calibrate, initialize and readout) qubits, into a series of illumination patterns, identifying qubits in the quantum register that need to be optically addressed. Further, the controller may include readout circuitry for readout of the qubits. At least a part such readout circuitry may be located or integrated with the chip that includes the qubits.

The system may further comprise a (purely classical information) input 1110 and a (purely classical information) output 1112. The input and output may be part of an interface, e.g. an interface such as a user interface or an interface to another system. Input data may include a quantum algorithm including gate operations and, e.g. parameter settings, which may be used to initialize the quantum algorithm. Similarly, output data may include results such as readout results and other information associated with the execution of the quantum algorithm.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

The terminology used herein is for the purpose of describing particular examples only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. Examples were chosen and described in order to best explain the principles of the invention and the practical application, and to enable others of ordinary skill in the art to understand the invention for various examples with various modifications as are suited to the particular use contemplated.

**Claims**

1. A method for outputting at least first and second electromagnetic, EM, signals for respectively interacting with spatially separated first and second matter particles in an interaction region; the matter particles act as qubits for use with a quantum computation; the quantum computation comprising a computation time period; the interaction of the EM signals with the qubits is associated with a Hamiltonian operator comprising at least a first and a second element;

the method comprising:

   A) generating EM radiation using an EM source;
   B) in any order,

      I) modulating the EM radiation with a first modulator, the first modulator configured to temporally modulate the EM radiation within the computation time period; the first modulator associated with the first element of the Hamiltonian operator;
      II) modulating the EM radiation with a second modulator, the second modulator configured to modulate the EM radiation such that the first EM signal is spatially separate to the second EM signal in the interaction region; the second modulator associated with the second element of the Hamiltonian operator; and,

   C) outputting the one or more EM signals, based on the modulated EM radiation, to the plurality of matter particles.

2. The method of claim 1 wherein the second modulator controls the first and second EM signals to control at least one of:

   i) the position;
   ii) the intensity;

   of each of the first and second EM signals.

3. The method according to any preceding claim, wherein the method further comprises:
   modulating the EM radiation with a third modulator, wherein the third modulator is configured to independently modulate the first and second EM signal interacting with the first and second qubits in the quantum computation; the third modulator associated with a third element of the Hamiltonian operator.

4. The method of claim 3 wherein the third modulator receives EM radiation modulated by the second modulator.

5. The method of claims 3 or 4 wherein the third modulator comprises a plurality of EM reflecting elements; and wherein

   I) the modulation of the EM radiation by the second modulator generates:

      a first EM beam associated with the first EM signal;
      a second EM beam associated with the second EM signal;

   II) the plurality of EM reflecting elements comprises:

      a first EM reflecting element configured to receive substantially all of the first EM beam;
      a second EM reflecting element configured to receive substantially all of the second EM beam.

6. The method of any preceding claim wherein the second modulator receives modulated EM radiation output from the first modulator.

7. The method of any preceding claim wherein the modulation of the EM radiation by the second modulator remains constant over the computation time period.

8. The method according to the any preceding claim wherein the plurality of matter particles are neutral atoms.

9. The method according to any preceding claim wherein the first and second EM signals comprise an off-resonance wavelength of an atomic transition.

**10.** The method of claim 9 wherein further EM radiation at a different wavelength to the first EM signal is incident upon a first matter particle; the wavelength of the further EM radiation for transitioning the first matter particle from a first energy state to a second energy state; the first EM signal preventing the said transition.

**11.** The method according to any preceding claim wherein the first and second EM signals comprise an on-resonant wavelength of an atomic transition.

**12.** The method of any preceding claim, wherein the Hamiltonian operator comprises a function in the form of:

$$\hat{\mathcal{H}} = A(t) \sum_{j} \epsilon_j \, \hat{\sigma}_j^{\alpha}$$

wherein $\hat{\mathcal{H}}$ represents the Hamiltonian applied to qubit $j$, first element $A(t)$ represents the modulation by the first modulator, second element $\varepsilon_j$ represents the modulation by the second modulator, and $\hat{\sigma}_j^{\alpha}$ represents a Pauli matrix where $\alpha$ is either $x$ or $z$ for resonant or off-resonant beams respectively.

**13.** The method of any of claims 3-5, wherein the Hamiltonian operator comprises a function in the form of:

$$\hat{\mathcal{H}} = A(t) \sum_{j} h_j(t) \epsilon_j \, \hat{\sigma}_j^{\alpha}$$

wherein $\hat{\mathcal{H}}$ represents the Hamiltonian applied to qubit $j$, first element $A(t)$ represents the modulation by the first modulator, second element $\varepsilon_j$ represents the modulation by the second modulator, $\hat{\sigma}_j^{\alpha}$ represents a Pauli matrix where $\alpha$ is either $x$ or $z$ for resonant or off-resonant beams respectively, and wherein third element $h_j(t) = 0,1$ and represents the modulation by the third modulator.

**14.** The method of any preceding claim wherein the quantum computation is an analog computation.

**15.** A system for outputting at least first and second electromagnetic, EM, signals for respectively interacting with spatially separated first and second matter particles in an interaction region; the matter particles act as qubits for use with a quantum computation; the quantum computation comprising a computation time period; the interaction of the EM signals with the qubits is associated with a Hamiltonian operator comprising at least a first and a second element; the system configured to:

A) generate EM radiation using an EM source;
B) in any order,

I) modulate the EM radiation with a first modulator, the first modulator configured to temporally modulate the EM radiation within the computation time period; the first modulator associated with the first element of the Hamiltonian operator;
II) modulate the EM radiation with a second modulator, the second modulator configured to modulate the EM radiation such that the first EM signal is spatially separate to the second EM signal in the interaction region; the second modulator associated with the second element of the Hamiltonian operator; and,

C) output the one or more EM signals, based on the modulated EM radiation, to the plurality of matter particles.

Fig. 1

**Fig. 2A**

**Fig. 2B**

**Fig. 2C**

Fig. 2A / 2B boxes: 212, 211, 209, 210₁, 210₂, 208, 206/204, 204/206, 203

Fig. 2C:

configuring micromirrors of a first and second micromirror device in accordance with a first and second illumination pattern respectively, the first and second illumination pattern identifying qubits in the qubit array that need to be optically addressed; 220

generating a structured light beam which is spatially structured in accordance with the spatial arrangement of the qubits in the qubit array and the spatial arrangement of micromirrors of the first and second micromirror device and which is temporally structured based on a polarization or phase of the structure light beam; 222

exposing the first micromirror device with part of the structured light beam that is associated with a first polarisation or first phase and exposing the second micromirror device with a part of the structured light beam that is associated with a second polarisation or a second phase; 224

exposing qubits identified by the first illumination pattern with a plurality of focused light beams formed based on spatially structured light originating from the first micromirror device and exposing qubits identified by the second illumination pattern with a second plurality of focused light beams formed based spatially structured light originating from the second micromirror device. 226

Fig. 3

Fig. 5

Fig. 4B

Fig. 4A

Fig. 6A

Fig. 6B

Fig. 7A

Fig. 7B

Fig. 8A

Fig. 8B

Fig. 8C

902

904

906

910

908

Fig. 9A

Generating electromagnetic (EM) radiation using an EM source.

920

In any order:

• modulating the EM radiation with a first modulator, the first modulator configured to temporally modulate the EM radiation within the computation time period; the first modulator associated with the first element of the Hamiltonian operator;

• modulating the EM radiation with a second modulator, the second modulator configured to modulate the EM radiation such that the first EM signal is spatially separate to the second EM signal in the interaction region; the second modulator associated with the second element of the Hamiltonian operator.

922

Outputting the one or more EM signals, based on the modulated EM radiation, to the plurality of matter particles.

924

Fig. 9B

$$i h \frac{d|\psi\rangle}{dt} = \mathcal{H}|\psi\rangle$$

$$\hat{\mathcal{H}} = A(t) \sum_j \epsilon_j \, \hat{\sigma}_j^\alpha$$

Fig. 10B

Fig. 10A

Fig. 10C

1100

classical computer 1104

CPU 1118

illumination pattern generator 1116

Quantum Circuit 1114

quantum computer 1102

quantum register 1106

control and interface 1108

1110

1112

Fig. 11

Europäisches
Patentamt
European
Patent Office
Office européen
des brevets

# EUROPEAN SEARCH REPORT

Application Number

EP 23 30 6300

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | IGNACIO R SOLA ET AL: "Two-qubit atomic gates: Spatio-temporal control of Rydberg interaction", ARXIV.ORG, CORNELL UNIVERSITY LIBRARY, 201 OLIN LIBRARY CORNELL UNIVERSITY ITHACA, NY 14853, 27 April 2023 (2023-04-27), XP091495935, DOI: 10.1039/D2NR04964C * abstract * * sections I, II, VI * ----- | 1-15 | INV. G06N10/40 |
| A | WO 2021/112948 A1 (MASSACHUSETTS INST TECHNOLOGY [US]; KIM DONGGYU [US] ET AL.) 10 June 2021 (2021-06-10) * abstract * * figures 7, 10-12 * * paragraph [0006] * * paragraph [0033] – paragraph [0037] * * paragraph [0056] – paragraph [0058] * * paragraph [0074] – paragraph [0083] * ----- | 1-15 | |

TECHNICAL FIELDS
SEARCHED (IPC)

G06N

The present search report has been drawn up for all claims

| Place of search | Date of completion of the search | Examiner |
|---|---|---|
| The Hague | 11 January 2024 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 6300

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2024

| Patent document cited in search report | Publication date | Patent family member(s) | Publication date |
|---|---|---|---|
| WO 2021112948 A1 | 10-06-2021 | US 2021166147 A1 <br> WO 2021112948 A1 | 03-06-2021 <br> 10-06-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019014589 A
- WO 2021112948 A

- WO 2021222211 A

**Non-patent literature cited in the description**

- **HENRIET et al.** Quantum computing with neutral atoms. *quantum journal,* 21 September 2020, vol. 4, 327